# EUROPEAN PATENT APPLICATION

(11) **EP 1 288 787 A2**
(43) Date of publication of application: **05.03.2003**
(21) Application number: 02102211.6
(22) Date of filing: 22.08.2002
(51) Int. Cl.: G06F 15/02

(54) **Interactive object transformation based expert system for symbolic mathematics on a handheld device**

(30) Priority: 24.08.2001 US 939128
(71) Applicant: Texas Instruments Incorporated, Dallas, Texas 75251 (US)
(72) Inventor: CHILD, J. Douglas, Maitland, FL 32751 (US); BROTHERS, Malgorzata A., Plano, TX 75025 (US)
(74) Representative: Holt, Michael

(57) **Abstract**

A graphing calculator (10) having a user interface on a screen display (100) that assists the user to learn the symbolic aspects of algebra and calculus by helping them analyze the structure of the mathematical objects they are working with, the legal transformations (Fig. 2b) that they can apply to those objects and the results of the transformation. An embodiment of the present invention is a graphing calculator, which allows the user to step through the solution of a computational mathematical problem. Similarly, other embodiments include the same user interface functionality in a software application package that is executed on a graphing calculator or other handheld device.

## Description

### TECHNICAL FIELD OF THE INVENTION

This invention relates to electronic calculators, and more particularly to a calculator that has an expert system for interactive object transformation to aid a student to learn mathematical symbolic calculation.

### BACKGROUND OF THE INVENTION

Electronic calculators have become a common tool for teaching students mathematics. In particular, the advantages of graphing calculators are being utilized in the classroom. Graphing calculators are characterized by a larger screen, which permits the entry of mathematical expressions in a logical format. They also permit graph displays and table displays. They have sophisticated programming capability. They often permit data transmission to other computing devices, directly or via a data storage medium, as well as data collection via various interface protocols. Particular calculator models are often designed for particular educational levels. For example, a calculator for middle school students might have less advanced features than one designed for older students. However, regardless of the level for which a calculator is designed, a continual goal in designing them is to provide a logical and easy to use interface.

### SUMMARY OF THE INVENTION

The present invention seeks to help students of mathematics learn the symbolic aspects of algebra and calculus by helping them to use definitions and theorems to solve symbolic calculation problems and obtain textbook like solutions. The invention helps the students analyze the structure of the mathematical objects they are working with, the legal transformations that they can apply to those objects and their legal sub-objects, and the results of the transformation.

An embodiment of the present invention is a graphing calculator, which allows the user to step through the solution of a mathematical problem. The user interface of the present invention calculator helps the student to more readily learn problem solution and the mathematical theory involved. Similarly, other embodiments include the same user interface functionality in a software application package that is executed on a graphing calculator or other handheld device.

The calculator in the present invention may otherwise be a conventional graphing calculator. Namely, the calculator screen is capable of two-dimensional displays and of displaying at least straight lines in any direction and a cursor. A key panel has keys at least capable of selecting positions of the cursor and moving the cursor horizontally or vertically on said screen.

### BRIEF DESCRIPTION OF THE DRAWINGS

FIGURE 1 illustrates the front panel of a calculator 10 which incorporates the invention.
FIGURES 2a-o illustrate the basic steps to solve a quadratic equation with the expert system according to the present invention.
FIGURES 3a-d illustrate the expert system according to the present invention used to make transformations on a sub-expression.

### DETAILED DESCRIPTION OF THE INVENTION

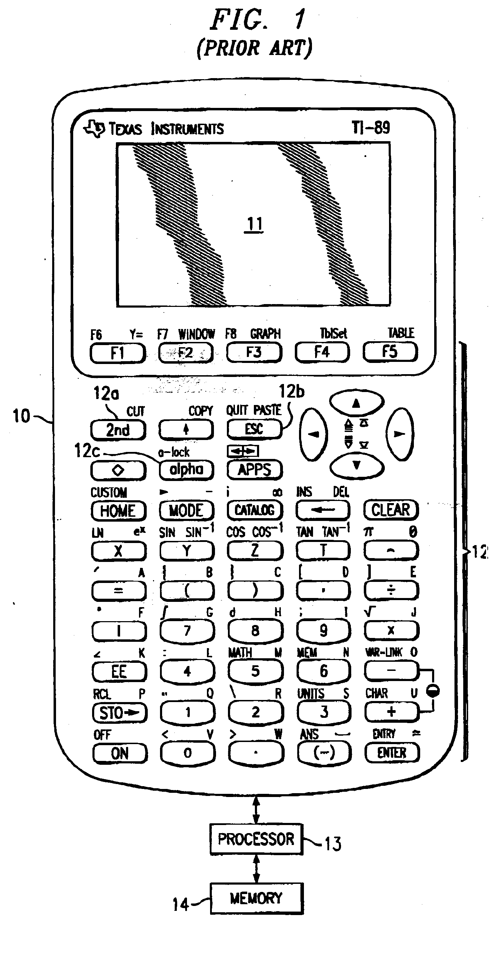

FIGURE 1 illustrates the front panel of a calculator 10, which incorporates the features of the present invention. Calculator 10 is described herein in terms of particular software and hardware features of the TI-89, a commercially available graphing calculator manufactured by Texas Instruments Incorporated. Apart from the features of the present invention, many of the features of calculator 10 described herein are typical of graphing calculators, while other features are unique to the TI-89 and TI92 Plus "family" of TI calculators. The use of the TI-89 is for purposes of description, and does not limit the invention. The features that are the subject of the present invention could be incorporated into other calculators that provides graphical displays, or they could be incorporated into other computer based teaching tools and handheld computers.

In FIGURE 1, the screen 11 of calculator 10 has a "graphical display", as that term is used herein. In addition to the ability to draw graphical displays of various types, some of the software features of calculator 10 include, software applications loading and storage, keystroke programming. It also permits data collection, display and analysis.

Various hardware features include a large pixel screen 11, which is 100 x 160 pixels. A keypad 12 has various keys for data and command entry, some of which are used to implement the invention and are described herein. The calculator includes a processor 13 connected to a memory unit 14 a 256K byte RAM and 721K byte application space. Other features are an I/O port for data linking, and a unit-to-unit link cable connection capability.

As is typical of calculators, calculator 10 has a secondary function key, 2nd key 12a, which permits other keys to have two functions. For example, by pressing 2nd key 12a and then ESC/QUIT key 12b, the calculator performs the QUIT function. For simplicity of explanation herein, a key having two functions is referred to in terms of the function appropriate for the context, i.e., when discussing the QUIT function, the ESC/QUIT key 12b is referred to as the QUIT key 12b. Similarly, calculator 10 has an Alpha key 12c, which when depressed makes the other keys subsequently depressed to input an alpha character.

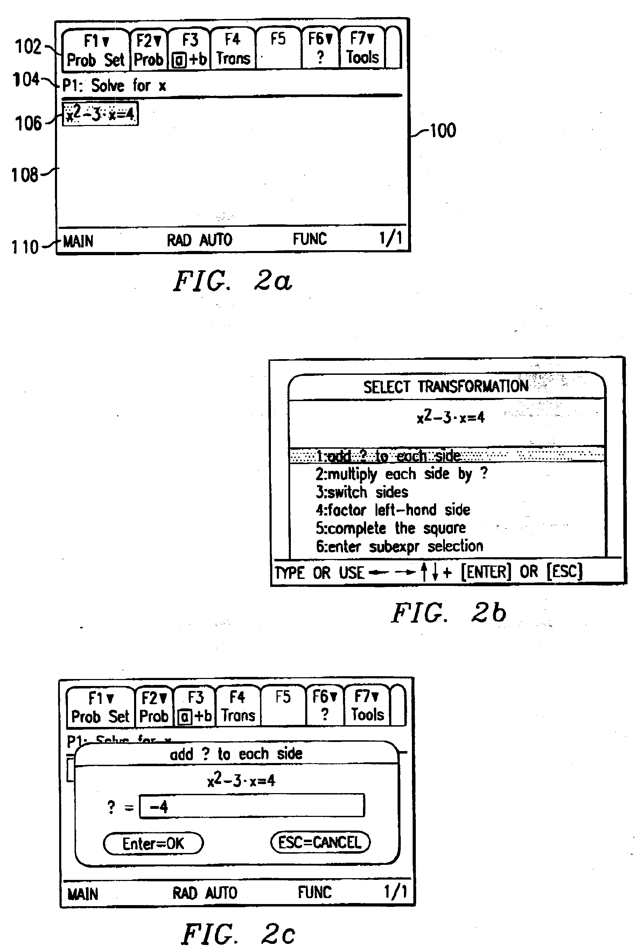

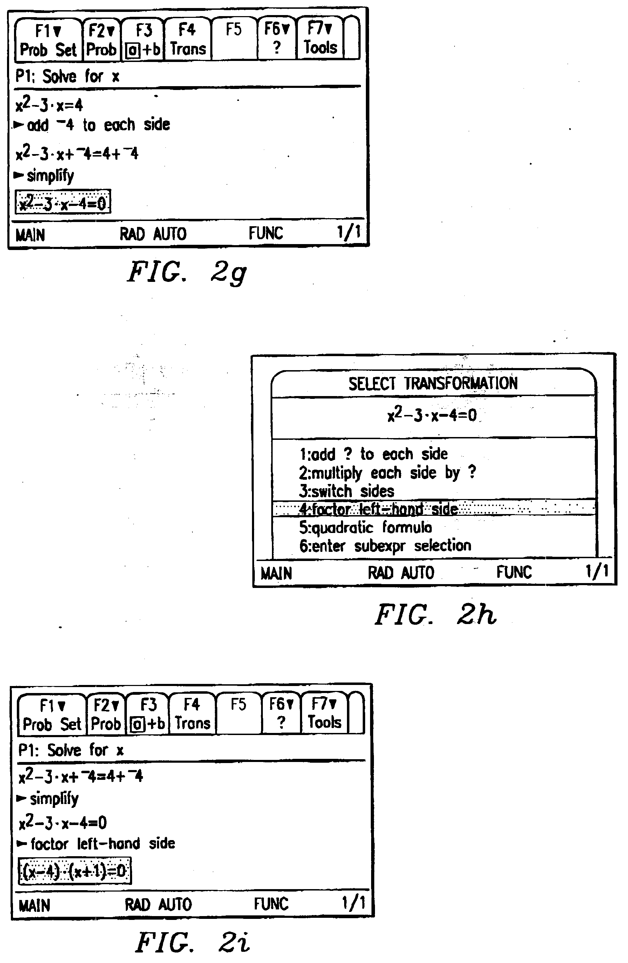

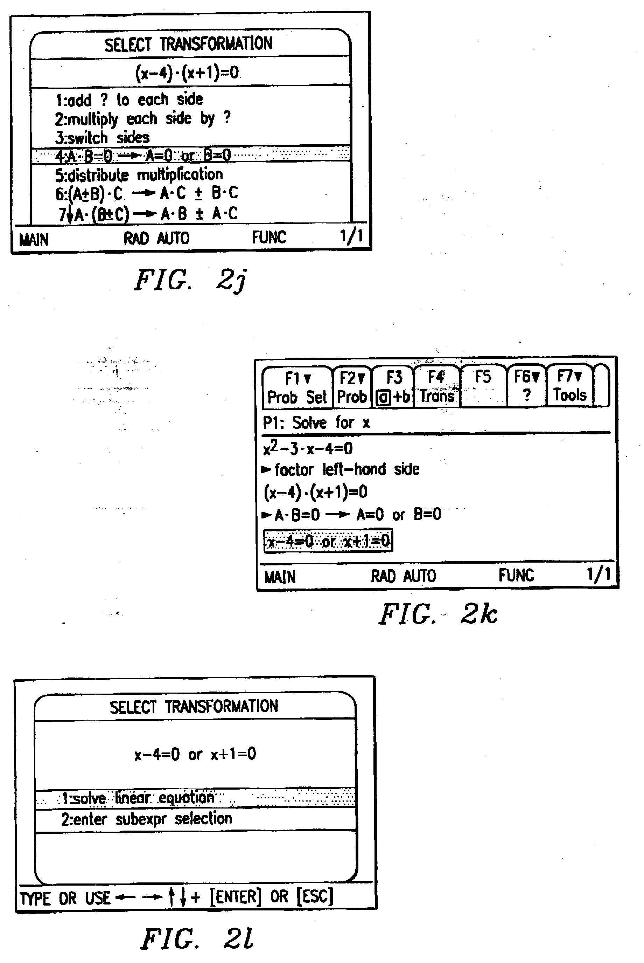

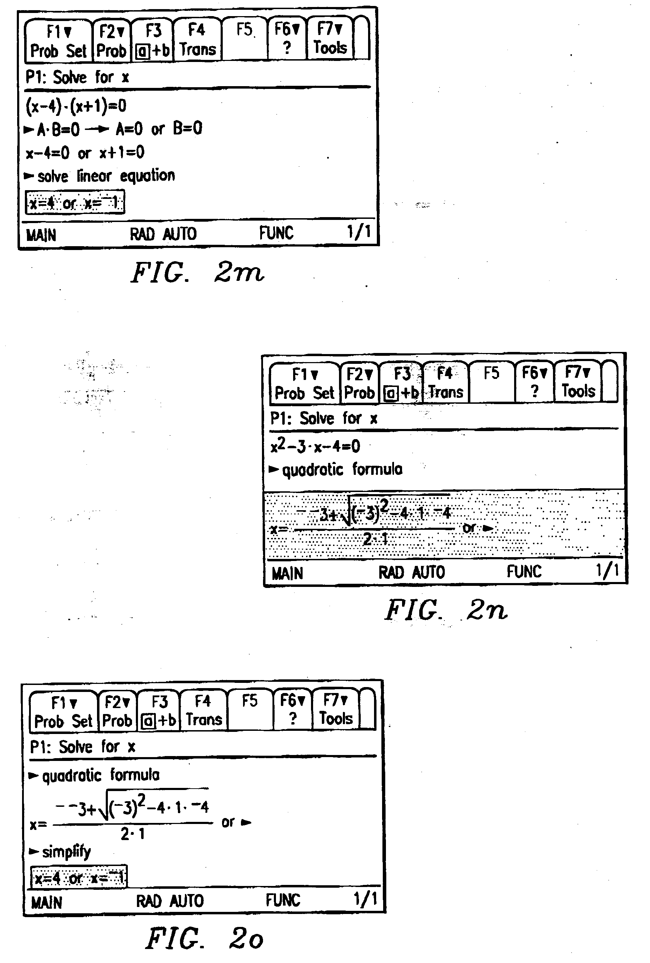

FIGURES 2a-o illustrate an example of the screen displays of an embodiment of the present invention. The screen displays are typical for the calculator illustrated in Figure 1 while running an application called Symbolic Math Guide (SMG), which incorporates an expert system for interactive object transformation according to the present invention. The Symbolic Math Guide provides step-by-step problem-solving transformations for classes of symbolic computations such as algebra and calculus to help students learn symbolic computation.

The screen display 100 of Figure 2a shows the screen display after initiating the SMG and selecting a problem set. The top area of the screen display 100 shows a menu bar 102. Below the menu bar is the problem identification and navigation bar 104, which allows the user to select the next or a previous problem in the problem set. The first problem in the problem set is identified by the "P1" in the problem navigation bar. The current problem 106, in this case problem 1, is shown in the active screen area 108. A status line 110 is shown at the bottom of the screen. The status line changes to help the user. For example, the status line will indicate which function keys are available in the current mode.

The problem navigation bar 104 also includes the problem type displayed next to the problem number, in this case, "solve an equation for x." Control is moved to the navigation bar by moving the inverse video cursor over the navigation bar using the arrow keys. The navigation bar is then highlighted by inverse video and activated. When the navigation bar is activated, the left and right arrow keys will display the previous and next problems in the problem set respectively.

The display shown in Figure 2a would be the initial screen display for solving the problem shown 106. In this case, "solve for x". The user is able to solve the problem with an interactive expert system by choosing available transformations. The control menu includes "F4 Trans" to indicate that pressing the "F4" key will activate the transformation menu. Pressing the F4 key from the display shown in Figure 2a results in the display shown in Figure 2b. The transformations listed in Figure 2a are those that are possible for the current state of the solution. Some of the possible transformations may not be optimal or lead to solving the problem. The possible transformations are selected by the SMG software for the current problem type and the current state of the solution.

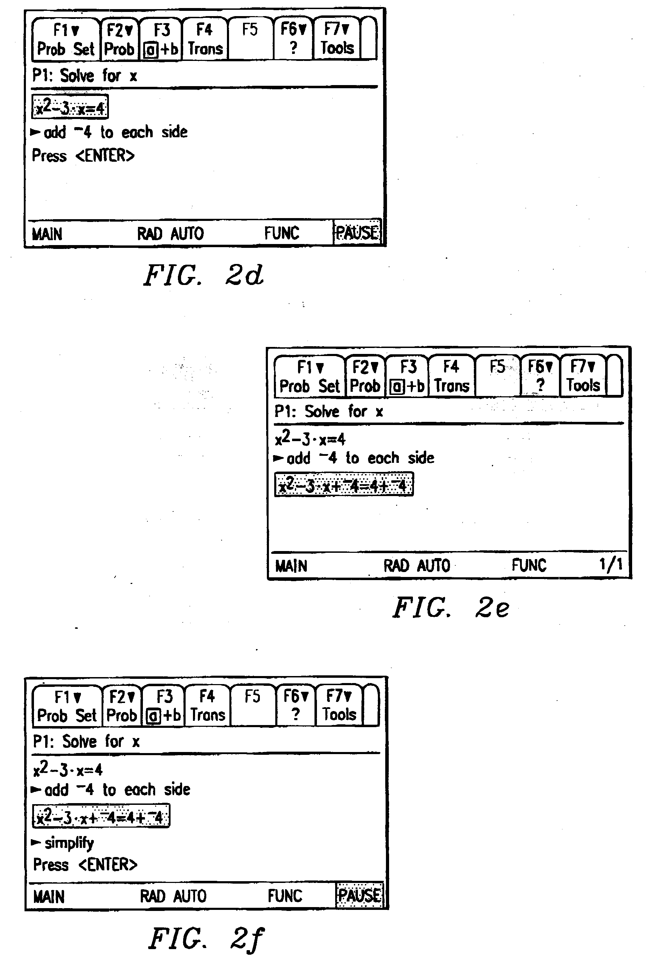

In the sequence shown in Figure 2, the user has selected transformation "1:add ? To each side" by pressing "enter" when the first transformation is highlighted. The result of this selection is shown in Figure 2c. A dialog box in Figure 2c allows the user to enter the amount to add to each side of the equation. In this case, "-4" is added to each side by entering the amount and pressing "enter." The result is shown in Figure 2d. The transformation is displayed as shown in Figure 2d, giving the user time to consider what happens when the transformation is applied. At this point, pressing "Enter" as suggested by the prompt will apply the transformation. Applying the transformation results in the display shown in Figure 2e.

From the display shown in Figure 2e, the user can press F4 and select the transformation to perform the arithmetic, or the user can simply hit "Enter" to simplify the equation. Pressing "Enter" from the display of Figure 2e results in the display of Figure 2f. Here the user is again given the opportunity to consider the result of the operation, and pressing "Enter" again will simplify the highlighted equation to that shown in Figure 2g. The "add to each side" transformation is now complete.

The equation shown in Figure 2g can be further transformed using the same steps used above. Pressing F4 will display the transformations that are available for the current equation shown in Figure 2g. Figure 2h illustrates the transformations available, including the selected transformation of "factor the left hand side." The results of the transformation are shown in Figure 2i. (The additional steps of pausing to allow the user to consider the operation have been left out of the figures at this point.) The expression shown in Figure 2i is further transformed by selecting the transformation of "A·B=0 → A=0 or B=0" as shown in Figure 2j. The result of this transformation is shown in Figure 2k. Again pressing F4 shows the transformations available to the user for the current object. Figure 21 illustrates the selection of "solve the linear equation." This final transformation gives the solution as shown in Figure 2m.

A feature of the present invention is that the system allows the user to explore the available transformations for a given problem type without the system giving the solution or prompting the user to a specific sequence of transformations. The user/student is given possible transformations, but some transformations may not lead to the solution, and there may be more than one sequence that does lead to the solution; just like if the user were solving the problem with a pencil and paper. In the expression illustrated in Figure 2, another solution is possible. In Figure 2h, the user may also select to apply the transformation "quadratic formula." Applying this transformation is shown in Figure 2n. Again, pressing "Enter" will simplify the quadratic formula as shown in Figure 20. This gives the same solution as found above using a different set of transformations.

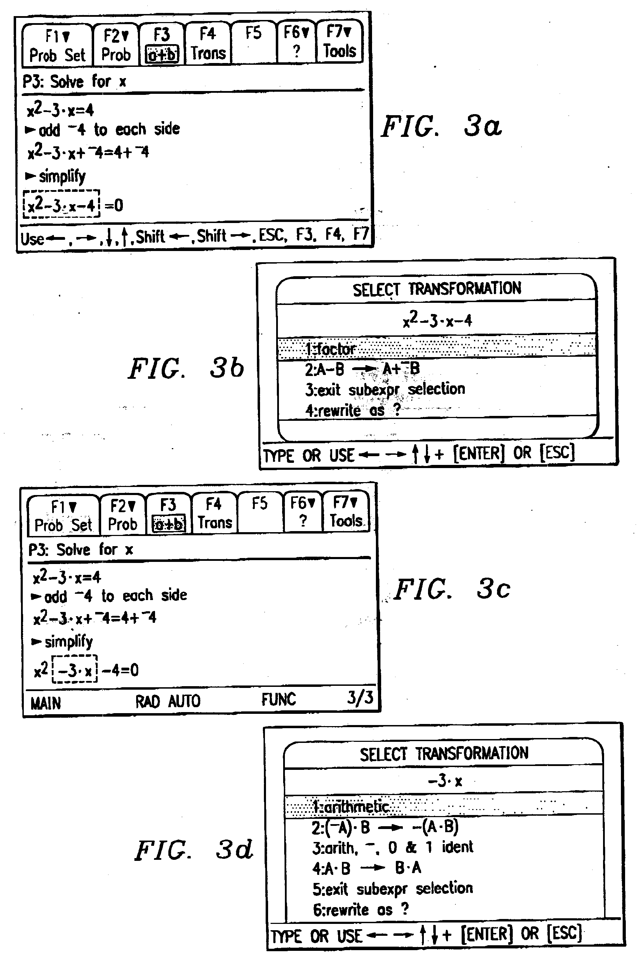

Further, pressing the function key F3 from the display shown in Figure 2a will activate the sub-expression selection mode and change the display to that shown in Figure 3a. In the embodiment shown here, the cursor in the sub-expression selection mode is changed to a dashed selection box 114 around the sub-expression. In the sub-expression selection mode, the user can manipulate the sub-expression to be selected by changing the selection box to surround the desired sub-expression. Keys that are active to manipulate the box are shown on the prompt line 116. Pressing the up-arrow key expands the box to include a larger portion of the expression in the selection box. Pressing the up-arrow while on the expression shown in Figure 3a expands the selection box to that shown in Figure 3b. The sub-expression selection mode can also be used to copy sub-expressions from the history screen. This feature is further described in a co-filed patent titled "Selection of Mathematical Objects and Expressions From The History Screen On A Handheld Device."

Once selected, the sub-expression can be manipulated using transformations as described above. Pressing the F3 key from the display shown in Figure 3a results in the display of Figure 3b, which shows the available transformations to the sub-expression in the selected box in Figure 3a. The transformations are appropriate for the expression in the selection box when the F3 key is pressed. As described above, the selection box can be manipulated to select a sub-expression. Figure 3c shows the box selecting a sub-expression of the previous example. Pressing the F3 key from the display shown in Figure 3c will show the transformations applicable to the sub-expression in the box of Figure 3b.

Another feature of the SMG and the present invention is the interactive help feature. Pressing F6 brings up a help menu. This menu includes a goal feature that suggests to the user the goal for the current problem. The goal is specific to the current problem type. Another menu option is application help, which explains how to use the SMG application. Another menu option is the sub-expression help, which gives further information on how to use the sub-expression mode.

### Other Embodiments

Although the present invention has been described in detail, it should be understood that various changes, substitutions, and alterations could be made hereto without departing from the spirit and scope of the invention as defined by the appended claims.

## Claims

1. A handheld computing device comprising:
a screen capable of displaying mathematical expressions;
a key panel having keys operating the calculator and entering user responses;
a processor for executing programming that provides a user interface to assist the user in learning to solve a mathematical symbolic calculation problem,
and expert programming which provides a set of transformations for a mathematical object that the user can choose from and apply to the mathematical object to produce the next step in a solution to the problem.

2. The handheld computing device of Claim 1, wherein said processor is further programmed to allow transformations of the mathematical object that are valid mathematically but do not lead to the solution of the problem.

3. The handheld computing device of Claim 2, wherein said processor is further programmed to pause after the user selects the transformation before applying the transformation to the problem.

4. The handheld computing device of Claim 3, wherein said processor is further programmed to clean-up the result of a previous transformation in response to the user pressing a key, where clean-up consists of arithmetic and other basic simplification appropriate for the problem.

5. The handheld computing device of any preceding claim, wherein said processor is further programmed to provide a set transformation tools for a mathematical sub-object that the user can choose from and apply to the mathematical sub-object in a selection box to produce the next step in a solution to the problem.

6. The device of any preceding claim, being a graphing calculator.
